# EUROPÄISCHE PATENTSCHRIFT

(11) **EP 3 692 261 B1**
(45) Veröffentlichungstag und Bekanntmachung des Hinweises auf die Patenterteilung: **30.08.2023**
(21) Anmeldenummer: 18782940.3
(22) Anmeldetag: 01.10.2018
(51) Int. Cl.: F03G 7/06

(54) **ANTRIEBSSYSTEM MIT WENIGSTENS EINEM METALLELEMENT AUFWEISEND EINE FORMGEDÄCHTNIS-CHARAKTERISTIK**
DRIVE SYSTEM COMPRISING AT LEAST ONE METAL ELEMENT EXHIBITING SHAPE MEMORY PROPERTIES
SYSTÈME D'ENTRAÎNEMENT MUNI D'AU MOINS UN ÉLÉMENT MÉTALLIQUE PRÉSENTANT UNE CARACTÉRISTIQUE DE MÉMOIRE DE FORME

(30) Priorität: 05.10.2017 DE 102017123146; 27.04.2018 DE 202018102372 U
(43) Veröffentlichungstag der Anmeldung: 12.08.2020
(73) Patentinhaber: Bleco - Apparatebau GmbH, 48268 Greven (DE)
(72) Erfinder: PATTEN, Werner, 48268 Greven (DE)
(74) Vertreter: Dr. Träger & Strautmann PAe PartG mbB
(86) Internationale Anmeldenummer: PCT/EP2018/076662
(87) Internationale Veröffentlichungsnummer: WO 2019/068648

(56) Entgegenhaltungen:
- DE-A1-102010 032 777
- GB-A- 2 533 357
- US-A- 4 325 217
- US-A- 4 955 196

## Beschreibung

Die Erfindung bezieht sich auf ein Antriebssystem, basierend auf zyklischer Umwandlung von thermischer in mechanische oder elektrische Energie durch Ausnutzung einer Temperaturdifferenz zwischen zwei Medien und der Kontraktion eines Metallelementes mit Formgedächtnischarakter.

Das Antriebssystem umfasst:
- wenigstens ein Antriebsaggregat, welches ein Gehäuse mit wenigstens einem innerhalb des Gehäuses platzierten Metallelement umfasst,
- wenigstens ein innerhalb des Gehäuses befindliches Rückstellelement,
- wenigstens ein bewegliches Betätigungselement, mit dem das Metallelement und das Rückstellelement gekoppelt sind,
wobei das Metallelement und das Rückstellelement durch ein gasförmiges oder flüssiges Medium umströmt werden. Die Kontraktion des Metallelements erfolgt vorzugsweise in uniaxialer Richtung und ist reversibel. Ferner betrifft die Erfindung ein Verfahren zur Energiegewinnung mit Hilfe eines solchen Antriebssystems.

Das Metallelement besteht aus einer Legierung mit Formgedächtnis. Formgedächtnislegierungen sind spezielle Metalle, die in zwei unterschiedlichen Kristallstrukturen existieren können. Sie werden auch als Memorymetalle bezeichnet. Dies rührt von dem Phänomen her, dass sie sich an eine frühere Formgebung trotz nachfolgender starker Verformung scheinbar erinnern können und bei vordefinierten äußeren Bedingungen nach einer Verformung ihre ursprüngliche Kontur wieder annehmen können.

Formgedächtnislegierungen können sich durch einen sogenannten Zweiwegeeffekt auch an zwei Formen - eine bei hoher und eine bei niedriger Temperatur - "erinnern". Bei hoher Temperatur weist das Metallelement eine austenitische und bei niedriger Temperatur eine martensitische Gefügestruktur auf. Das Abkühlen einer austenitischen Form bzw. Gefügestruktur auf eine Temperatur innerhalb des martensitischen Bereiches bewirkt somit eine Verformung.

Damit das Bauelement beim Abkühlen seine definierte Form wieder einnimmt, muss es durch thermomechanische Behandlungszyklen zunächst "trainiert" werden. Dies bewirkt die Ausbildung von Spannungsfeldern im Material, die die Bildung von bestimmten, beim Auskühlen entstehenden, Martensit-Varianten fördern.

Aus Formgedächtnis-Legierungen bestehende Metallelemente von unterschiedlicher Form, wie Draht- und Bandabschnitte, Stränge und Spiralen sind seit langem bekannt und werden in vielen Vorrichtungen und Geräten, insbesondere im Medizinbereich eingesetzt. Es werden auch Versuche vorgenommen, Antriebseinheiten für industrielle Zwecke zu bauen, bei welchen über die zyklische Kontraktion des Metallelementes Energie aus Abwärme zurückgewonnen wird.

Die Metallelemente können beispielsweise aus Kupfer-Zink-, Kupfer-Zink-Aluminium-, Kupfer-Aluminium-Nickel-, Eisen-Nickel-Aluminium-Legierungen bestehen. Vorwiegend handelt es sich jedoch um eine Nickel-Titanium-Legierung, Nitinol genannt. Nitinol hat eine signifikante Transformationseigenschaft um bei der Erwärmung oder Abkühlung wieder in seine ursprüngliche Form zurückzukehren, sobald es deformiert ist. Die Transformationsprozesse von Nitinol sind reversibel, wodurch sich die Gesamtentropie - zumindest theoretisch - nicht vergrößert, sondern konstant bleibt. Allerdings verliert das Nitinol seine sich zyklisch wiederholenden Eigenschaften, wenn es über eine maximale Schwellentemperatur hinaus erwärmt wird. Eine übermäßige Temperatur bzw. Verformung des Nitinol-Elementes kann zur Deregulierung und Beschädigung des Antriebssystems führen.

Ein im Oberbegriff beschriebenes Antriebssystem ist aus DE 10 2010 032 777 A1 bekannt. Das bekannte Antriebssystem offenbart im Wesentlichen eine Anordnung von Formgedächtnis aufweisenden Metallelementen in einem Gehäuse und spezielle unterschiedliche Kraftübertragungseinrichtungen, wie Permanentmagnete und Spulen. Das Formgedächtniselement ist mit seinem einen Ende am Gehäuse und mit seinem anderen Ende an einem ins Innere des Gehäuses ragenden Verbindungselement befestigt, welches auf das Formgedächtniselement hebelartig wirkt. Das Verbindungselement teilt das Innere des Gehäuses in zwei Kammern, welche miteinander in Kontakt stehen, so dass das gasförmige oder flüssige Medium gleichzeitig diese beiden Kammern durchströmen muss. Innerhalb des Gehäuses, direkt in das Verbindungselement, ist ein Ventil eingebaut.

Das bekannte Antriebssystem offenbart keine technischen Mittel, mit denen die wichtigen Parameter, wie vorgegebene Temperaturen eingehalten werden können. Insgesamt ist die Einrichtung kompliziert und teuer, da sie einen speziellen Bewegungsmechanismus des Formgedächtniselementes erfordert.

Aus DE 10 2014 006 505 A1 ist eine Apparatur zur Erzeugung von mechanischer oder elektrischer Energie durch die Nutzung einer im Verhältnis zum Stand der Technik geringen Temperaturdifferenz bekannt. Die Apparatur besteht aus einer festen Verbindung von thermischem Aktor und Flüssigkeitspumpe. Diese Einheit wird wechselweise in ein wärmeres Wärmeträgermedium und ein kälteres Wärmeträgermedium getaucht. Die Apparatur besteht aus einer festen Verbindung von thermischem Aktor und Flüssigkeitspumpe. Diese Einheit wird wechselweise in eine wärmeres Wärmeträgermedium und eine kälteres Wärmeträgermedium getaucht. Dabei verformt sich im thermischen Aktor eine große Zahl von linsenartig vorgespannten Thermobimetallen und treibt mittels einer Kolbenstange eine Flüssigkeitspumpe an. Die dabei entstehende Druckenergie erhöht die Druckenergie in einem Druckspeicher, um die stoßfreien und kontinuierlichen Betrieb eines Generators zu ermöglichen. Die jeweiligen Wärmeenergien werden in geeigneten Wärmespeichern gespeichert und mittels herkömmlicher Wärmetauscher der Atmosphäre, Gewässern oder dem Erdreich entnommen. Anwendungsgebiet.

Weiterhin ist aus US 4 325 217 A eine Vorrichtung bekannt, die ein Formgedächtnismaterial verwendet, um Wärmeenergie in mechanische Energie umzuwandeln. Die Vorrichtung umfasst einen Zylinder mit einem Kolben, welcher Öffnungen aufweist, die den Zylinderraum oberhalb des Kolbenbodens mit dem Zylinderraum unterhalb des Kolbenbodens verbinden. Der Zylinderraum ist zudem mit Leitungen verbunden, über deren Einlass- und Auslassöffnungen warmes und kaltes Wasser in den Zylinderraum zuführbar ist. Das Öffnen und Schließen der Leitungsöffnungen erfolgt mittels der an die Zylinderwand anschließenden Kolbenringfläche, welche bei der Auf- und Abwärtsbewegung des Kolbens im Zylinder die Ein- und Auslassöffnung zu den Leitungen wechselweise freigibt und verschließt. Dabei sind die Ein- und Auslassöffnungen für warmes Wasser an einem Ende des Zylinders angeordnet und die Ein- und Auslassöffnungen für kaltes Wasser am anderen Ende. An der Warmwasserseite wird die Kolbenstange von einer ersten Feder umhüllt, an der Kaltwasserseite wird die Kolbenstange von einer zweiten Feder umhüllt. Die zweite Feder an der Kaltwasserseite besteht aus einem Formgedächtnismaterial. Der Kolben bewegt sich hin und her, indem abwechselnd kaltes und warmes Wasser in den Zylinder eingelassen wird.

Der Wärmekraftmaschinenzyklus läuft folgendermaßen ab:
Wenn sich der Kolben am oberen Ende seines Hubs befindet, sind die Heißwassereinlass- und -auslassöffnungen blockiert. Kaltes Wasser fließt durch den Kaltwasseranschluss in den Zylinder und kühlt die zweite Feder aus Formgedächtnismaterial auf unter seine kritische Temperatur ab, wodurch sich das auf Wärme reagierende Material aus seinem Speicherzustand entspannt, so dass die erste Feder den Kolben nach unten drücken kann. Wenn der Kolben den Boden seines Hubs erreicht, sind die Kaltwassereinlass- und - auslassöffnungen blockiert und die Heißwassereinlass- und -auslassöffnungen sind geöffnet. Heißes Wasser kann in den Zylinder eindringen und durch die in der Oberseite des Kolbens vorgesehenen Öffnung fließen. Das heiße Wasser spült das kalte Wasser aus dem Zylinderinnenraum und erwärmt die zweite Feder aus Formgedächtnismaterial über ihre kritische Temperatur, wodurch die zweite Feder sich in ihren ursprünglichen, langgestreckten zustand ausdehnt und den Kolben in seine obere Position zwingt. Der Zyklus wiederholt sich dann kontinuierlich.

Nachteilig an dieser Vorrichtung ist, dass die Ein- und Auslassöffnungen der Warm- und Kaltwasserleitungen nur in ihrer jeweiligen Endlage vollständig geöffnet bzw. geschlossen sind. Während seiner Hubbewegung öffnet der Kolben sukzessive gleichzeitig die Kaltwasserleitung und schließt die Warmwasserleitung. Zum einen kommt es somit zu einer Durchmischung von warmen und kaltem Wasser, da bei nicht in einer Endstellung befindlichem Kolben alle Öffnungen gleichzeitig mehr oder weniger weit geöffnet sind. Zum anderen sind in der Mittelstellung des Kolbens die Warmwasser- und Kaltwasserleitungen gleich weit geöffnet, so dass bei gleicher Strömungsgeschwindigkeit von Kalt- und Warmwasser gleich viel warmes und kaltes Wasser in den Zylinderraum fließt und sich so eine Totpunktlage ausbilden kann, in der der Kolben verharrt.

Die Aufgabe der Erfindung ist es, ein alternatives, jedoch vereinfachtes Antriebssystem der eingangs genannten Art zu konzipieren, bei welchem die Temperaturunterschiede zwischen Erwärmung oder Abkühlung mit einfachen Mitteln konstant gehalten werden können.

Diese Aufgabe wird durch ein auf der Kontraktion eines Metallelementes basierendes Antriebssystem mit den Merkmalen des Anspruchs 1 gelöst.

Das Metallelement kontrahiert vorzugsweise in uniaxialer Richtung. Das erfindungsgemäße Antriebssystem umfasst:
- wenigstens ein Antriebsaggregat aufweisend wenigstens einen ersten und wenigstens einen zweiten Speicher enthaltend Medien von unterschiedlicher Temperatur, wobei am zweiten Speicher eine Durchgangsöffnung zur direkten Verbindung durch einen Boden des Gehäuses eingebracht ist,
- das Gehäuse in Form eines Zylinders, welcher einen flüssigkeits- und gasdicht angeordneten Zylinderkolben beinhaltet,
- wobei der Zylinderkolben den Zylinder in zwei Zylinderräume teilt, von denen der eine, erste Zylinderraum das Metallelement mit Formgedächtnis-Charakteristik und der andere, zweite Zylinderraum das Rückstellelement beinhaltet,
- und wobei das Metallelement an einem Befestigungspunkt an dem Zylinderkolben und an einem innerhalb des zweiten Speichers angeordneten Befestigungspunkt verankert ist, so dass ein Teilbereich des Metallelements mit dem Medium des zweiten Speichers in Kontakt steht.

Die im ersten und oder zweiten Speicher enthalten Medien haben eine unterschiedliche Temperatur und können flüssig oder gasförmig sein. Vorzugsweise weist dabei das Medium des zweiten Speichers eine Temperatur auf, die niedriger ist, als die Temperatur des Mediums des ersten Speichers.

Es wird ausdrücklich darauf hingewiesen, dass im Antriebssystem mehr als zwei Speicher und/oder mehr als zwei Antriebsaggregate eingesetzt werden können, deren in getrennten Gehäusen (Zylindern) angeordnete Zylinderkolben beispielsweise zyklisch mit entsprechenden Phasenverschiebungen nacheinander zusammenschaltbar sind.

Die Antriebsaggregate können aneinander fluidisch, elektrisch, elektromagnetisch, jedoch vorzugsweise mechanisch gekoppelt sein.

Das Antriebssystem umfasst einen ersten Speicher, der über eine erste Rohrleitung mit dem zweiten, das Rückstellelement enthaltenden Zylinderraum verbunden ist. In die Rohrleitung ist wenigstens ein erstes Ventil eingebaut. Der erste Speicher ist über eine zweite Rohrleitung mit dem ersten, das Metallelement enthaltenden, Zylinderraum verbunden, wobei in die Rohrleitung wenigstens ein zweites Ventil eingebaut ist. Als zweites Ventil ist vorzugsweise ein Rückschlagventil vorgesehen.

Von Vorteil ist, dass im Antriebssystem Ventile vorgesehen sind, welche außerhalb des Gehäuses, hier: außerhalb des Zylinders in bekannter Weise in Rohrleitungen eingebaut sind. Ein Einbau der Ventile ins Gehäuse erübrigt sich.

Bevorzugt ist das Metallelement draht-, band-, blatt-, strang- oder wendelförmig ausgeführt. Vorzugsweise liegt es in Form eines Abschnittes eines Nitinoldrahtes, insbesondere bevorzugt in Form einer Nitinolfeder vor.

Das Metallelement ist vorzugsweise aus Legierungen der Gruppen:
- Kupfer-Zink (CuZn)
- Kupfer-Zink-Aluminium (CuZnAl),
- Kupfer-Aluminium-Nickel (CuAlNi),
- Eisen-Nickel-Aluminium (FeNiAl)
- Nickel-Titan (NiTi)
ausgewählt.

Das im zweiten Zylinderraum angeordnete Federelement fungiert als Rückholelement. Als Federelement kann eine metallene Schraubenzugfeder oder ein zum Beispiel balgförmiges Elastomer vorgesehen sein, welches zyklisch über längere Zeit belastbar ist. Das Rückstellelement kann aber durch ein Zugmittel, wie ein an den Zylinderkolben koaxial angeschlossenes Seil, Draht oder Stab, ausgebildet sein. Die Kolbenstange kann auch in Form einer geschlitzten Hohlwelle, durch die der Draht läuft, vorliegen. Als Zylinder kann ein einfach- oder doppelwirkender Zylinder oder ein Teleskopzylinder eingesetzt sein.

Von großem Vorteil ist, dass das Metallelement mit Formgedächtnis innerhalb eines vordefinierten Temperaturbereiches reversibel verformbar ist. Formgedächtnislegierungen können sehr große Kräfte ohne auffallende Ermüdung auf mehrere 100.000 Bewegungszyklen übertragen. Im Vergleich zu anderen Aktor-Werkstoffen haben Formgedächtnislegierungen mit Abstand das größte spezifische Arbeitsvermögen (Verhältnis von geleisteter Arbeit zu Werkstoffvolumen).

Ein weiterer Vorteil ist, dass die innere Energie des Mediums, insbesondere Abwärme, in nutzbare mechanische Arbeit mit Hilfe einer simplen Vorrichtung, nämlich dem Antriebssystem gemäß der Erfindung umgewandelt werden kann.

Ein Verfahren zur Energiegewinnung durch Umwandlung von Wärme in mechanische oder elektrische Energie in einem geschlossenen Antriebssystem mit Hilfe wenigstens eines in wenigstens einem Zylinder platzierten Metallelementes, welches eine Formgedächtnis-Charakteristik aufweist und einer uniaxialen Kontraktion ausgesetzt ist, wobei ein Temperaturunterschied durch einen zyklischen Pumpvorgang aufrechterhalten wird, welcher durch einen sich hin- und her bewegenden Zylinderkolben realisiert wird, an dem das Metallelement befestigt ist, kann dadurch verwirklicht werden, dass ein Pumpvorgang gesteuert wird, indem eine Ventilsteuerung durch den Hub einer am Zylinderkolben vorgesehenen Kolbenstange betätigt wird.

Das Verfahren kann auch eine funktionale Verbindung von wenigstens zwei Antriebsaggregaten miteinander betreffen, indem an die Kolbenstangen Zugmittel koaxial angeschlossen sind, welche eine translatorische Bewegung längs der Zylinderachse bis zu den Umlenkrollen ausüben.

Bei der Wärme kann sich um jede mögliche Wärmequelle oder Wärmesenke oder durch technische Geräte und Anlagen erzeugte Abwärme handeln, beispielsweise von einer Verbrennungsmaschine, Heizkessel, einer geothermischen, solarthermischen oder einer exothermisch wirkenden chemischen Anlage. Mit dem Antriebssystem gemäß Erfindung können unterschiedliche Antriebskonzepte realisiert werden, beispielsweise eine Verbindung zwischen dem Zylinderkolben und Kurbelwelle, bei der ein linearer Hub des Zylinderkolbens die Kurbelwelle in eine kreisförmige Bewegung setzt. Es können mehrere parallel oder seriell zusammenschaltbare Antriebsaggregate aufweisend Formgedächtniselemente zum Einsatz kommen.

Die Erfindung wird in einigen Ausführungsbeispielen anhand der Zeichnung näher erläutert.

Die Figuren zeigen:
- Fig. 1: ein Blockschema des Antriebsystems mit zwei Speichern;
- Fig. 2: ein Blockschema des Antriebsystems mit drei Speichern;
- Fig. 3: Schema eines Kreisprozesses des Antriebssystems gemäß Fig. 1;
- Fig. 4: Schema eines Kreisprozesses des Antriebssystems gemäß Fig. 2;
- Fig. 5: das Antriebsystem gemäß Fig. 1, thermoisoliert, in einer schematischen Darstellung;
- Figuren 6a, 6b und 7a, 7b: schematisch jeweils einen Kreisprozess eines aus zwei aneinander gekoppelten Antriebsaggregaten bestehenden Antriebssystems;
- Fig.8: Anordnung von aus Zylinderkolben und Seilabschnitten bestehenden Rückstellelementen eines aus vier Antriebsaggregaten zusammengesetzten Antriebssystems, in einer vereinfachten Darstellung;
- Fig. 9: Schema eines alternativen Kreisprozesses des Antriebssystems.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

Im Weiteren wird der Begriff "Metallelement" durch "Nitinolfeder" ersetzt. Es wird angenommen, dass das Verhältnis von Nickel zu Titanium in der Nickel-Titanium-Legierung einer vorbestimmten Verformungstemperatur des Nitinol entspricht, sonst kann es zur Materialermüdung oder bleibender Verformung des Nitinoldrahtes und im Endeffekt zum Kollaps des erfindungsgemäßen Antriebssystems kommen.

Es werden nachstehend Ausführungen mit einachsigen Formgedächtniselementen, d. h. drahtartigen Nitinolfedern gezeigt.

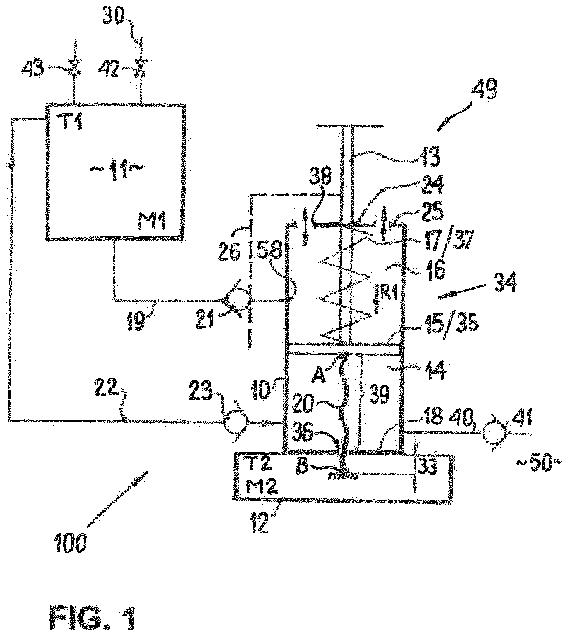

Ein in Fig. 1 schematisch dargestelltes Antriebssystem 100 ist durch ein Antriebsaggregat 49 ausgebildet, welches sich aus folgenden Elementen zusammensetzt:
- einem Gehäuse 34 in Form eines Zylinders 10 mit einem Zylinderboden 18 und einem Zylinderdeckel 25, wobei am Zylinderdeckel 25 wenigstens eine durchgehende Öffnung 38 eingebracht ist,
- einem innerhalb des Zylinders 10 bewegbaren Zylinderkolben 15 (Betätigungselement 35) mit einer Kolbenstange 13,
- einem ersten Speicher 11 (Wärmespeicher) mit Medium M1 und einem zweiten Speicher 12, welcher ein Medium M2 beinhaltet, dessen Temperatur T2 niedriger als die Temperatur T1 des Mediums M1 im ersten Speicher 11 ist,
- zwei durch den Zylinderkolben 15 voneinander getrennten Zylinderräumen 14, 16 von einem variablen Volumen, wobei der erste Zylinderraum 14 eine Nitinolfeder 20 beinhaltet, welche sich zwischen zwei Verankerungspunkten A am Zylinderkolben 15 und B innerhalb des zweiten Speichers 12 erstreckt,
- einem Rückstellelement 37, hier: Federelement 17 in Form einer die Kolbenstange 13 umgebenden Schraubenzugfeder, welche im zweiten Zylinderraum 16 befindlich und am Zylinderkolben 15 und am Zylinderdeckel 25 befestigt ist,
- wobei der erste Speicher 11 über eine erste Rohrleitung 19 mit dem zweiten Zylinderraum 16 und über eine zweite Rohrleitung 22 mit dem ersten Zylinderraum 14, welcher die Nitinol-Feder 20 beinhaltet, verbunden ist.

Die Nitinolfeder 20 reicht über eine am Zylinderboden 18 eingebrachte Durchgangsöffnung 36 ins Innere des zweiten Speichers 12. Dabei steht sie in einem vom Verankerungspunkt B zur Oberfläche des zweiten Speichers 12 reichenden Teilbereich 33 in Kontakt mit einem ersten Medium M1 und in einem vom Verankerungspunkt A bis zur Oberfläche des zweiten Speichers 12, beziehungsweise bis zum Zylinderboden 18 reichenden Teilbereich 39 in Kontakt mit dem zweiten Medium M2. Im dargestellten Ausführungsbeispiel handelt es sich bei dem ersten Medium um Wasser mit einer Temperatur T1 von 4°C und bei dem zweiten Medium M2 um ein Gas, beispielsweise Luft von einer Temperatur T2 von 20°C.

Wesentlich für die Erfindung ist, dass die Temperatur T1 so groß ist, dass eine Aktivierung der Nitinolfeder 20 bewirken kann. Die Temperaturdifferenz wird benötigt, um die Aktivierung der Nitinolfeder 20 zu beenden und ihre Rückstellung zu erwirken. Das erste Medium M1 kann in einem Kreislaufsystem mit den Bereichen Zylinderraum 14, Leitung 22, Speicher 11 und Leitung 19 zirkulieren.

Bei dem Kreislaufsystem kann es sich um ein geschlossenes System handeln, bei dem die Menge des im Kreislaufsystem zirkulierenden Mediums konstant ist (nicht dargestellt).

Alternativ hierzu kann das Kreislaufsystem eine Zuführ- und eine Abführeinrichtung für das erste Medium M1 umfassen. Bei dem in Figur 1 dargestellten Beispiel wird der Zulauf über eine Leitung 40 mit einem Ventil 41, beispielsweise einem Rückschlagventil, realisiert. Die Abführeinrichtung kann in Form einer an den Speicher 11 gekoppelten Leitung 30 mit einem Ventil 42 realisiert sein. Das Kreislaufsystem kann somit auch einen Kompressor ausbilden, der im Speicher 11 das erste Medium M1 komprimiert und einem nachgeschalteten Verbraucher zur Verfügung gestellt.

Das dem Kreislaufsystem gemäß Fig. 1 über den Zulauf 40 zugeführte Medium stammt entweder aus einer nicht dargestellten Speicheranlage oder aus dem Außenbereich 50. Handelt es sich bei dem Außenbereich 50 beispielsweise um die Atmosphäre, so ist das Medium die Umgebungsluft. Es kann vorgesehen sein, dass auch als erstes Medium M1 Umgebungsluft vorgesehen ist. Die Temperatur T1 entspricht in diesem Fall im Wesentlichen der Umgebungstemperatur.

Die Temperatur des zweiten Mediums M2 im zweiten Speicher 12 ist im Wesentlichen konstant. Da über die Leitung 40 eine Zufuhr von Umgebungsluft, aus dem Außenbereich 50 zum Zylinderraum 14 vorgesehen ist, wobei im Beispiel gemäß Figur 1 die Außenluft auch das erste Medium M1 darstellt, gleicht sich die Temperatur T1 bei fortlaufendem Prozess an die Umgebungstemperatur an. Ein solches System kommt beispielsweise in Betracht, wenn im Außenbereich 50 die Abwärme eines Motors ein quasi unbegrenztes Reservoir bildet.

Der Zylinderkolben 15 bewegt sich im Zylinder 10 oszillierend in Richtung Zylinderboden 18 (Richtung R1) und Zylinderdeckel (Richtung R2) hin und her. Um dabei das Entstehen von Druckdifferenzen im Zylinderraum 16 zu vermeiden sind im Zylinderdeckel 25 die bereits genannten Öffnungen 38 vorgesehen.

Die Temperatur-, und Dehnungsniveaus werden so konfiguriert, dass die besagte Nitinolfeder 20 während der mechanischen Beanspruchung und Entlastung zyklisch zwischen Austenit- und Martensitphasen übergeht.

In die erste, zu einer Öffnung 58 am Zylinder 10 geführte Rohrleitung 19 ist ein Ventil 21 eingebaut, das im dargestellten Ausführungsbeispiel durch den Hub der Kolbenstange 13 gesteuert ist. An der zweiten Rohrleitung 22 ist ein weiteres Ventil 23 vorgesehen, welches als Rückschlagventil fungiert.

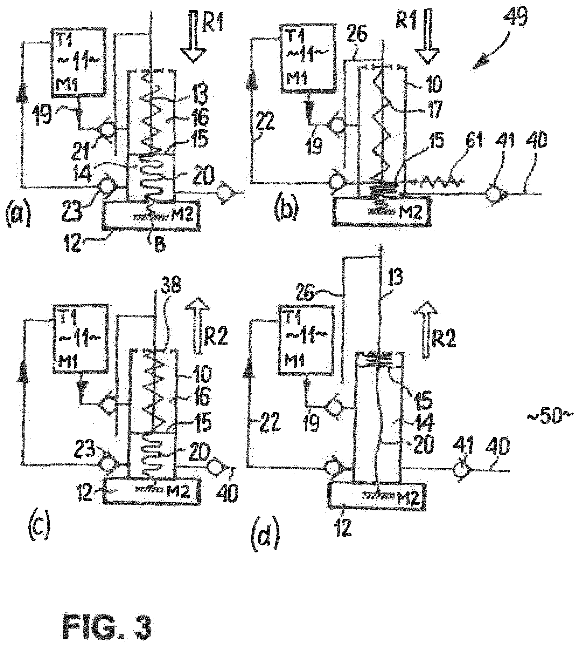

Am Zylinderdeckel 25 ist ein Dichtungselement 24 für die Kolbenstange 13 vorgesehen, das in Form eines profilierten Gummiringes ausgeführt werden kann. Wie die Fig. 3 zeigt, kann am Zylinderkolben 15 eine umlaufende Kolbendichtung 27 (O-Ring) vorgesehen sein.

Weiterhin zeigt die Fig. 1 eine mit Strichlinie angedeutete Ventilsteuerung 26, welche mechanisch, elektrisch bzw. elektronisch auf das Ventil 21 wirkt. Mit dem Hub der Kolbenstange 13 wird eine proportionale Steuerung des Ventils verwirklicht. Vorzugsweise erfolgt die Steuerung ohne externe Energiezufuhr, beispielsweise durch eine beim Prozess erzeugte Energie.

Es wird eine möglichst adiabatische Zustandsänderung angestrebt, d. h. ein thermodynamischer Vorgang, bei dem das System, im vorliegenden Fall das Antriebssystem 100, von einem Zustand in einen anderen überführt wird, ohne Wärme mit seiner Umgebung auszutauschen. Es werden die Bedingungen für adiabatische Zustandsänderungen in der Praxis jedoch nie hundertprozentig erreicht.

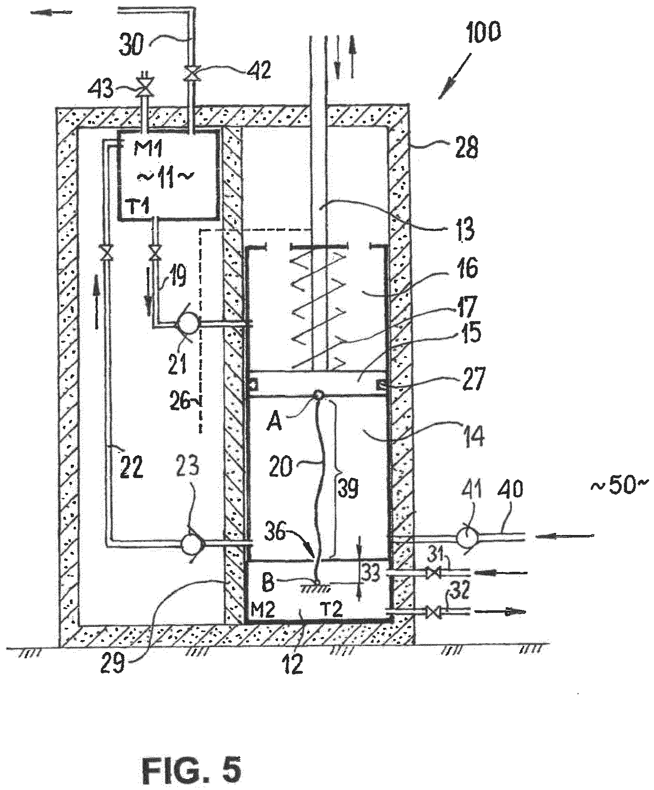

Um das Antriebssystem 100 wärmedicht zu machen, kann es in einem thermoisolierenden Gehäuse 28 untergebracht sein (vgl. Fig. 5). Eine ebenso thermoisolierende Innenwand 29 trennt den ersten Speicher 11 mit dem warmen Medium M1 von dem mit kälterem Medium M2 gefüllten zweiten Speicher 12 samt Kolbenzylinder voneinander. Die Abwärme kann von einem nicht dargestellten Motor oder einer sonstigen Verbrennungsmaschine oder einem industriellen chemischen Umwandler (Reaktor), einem Ofen, Kläranlage, Bioenergieanlage, Geothermie etc. zur Verfügung gestellt werden.

Der im Gehäuse 28 befindliche zweite Speicher 12 ist im dargestellten Ausführungsbeispiel mit Medium M2 von einer Temperatur T2, beispielsweise mit Wasser gefüllt. Um die Temperatur des im Speicher 12 enthaltenen Mediums M2, hier Wasser, konstant zu halten, kann eine nicht dargestellte Kühleinrichtung oder eine mit einem ebenfalls nicht dargestellten Reservoir verbundene Zulaufleitung 31 (vgl. Fig. 5) vorgesehen sein. Soweit als Reservoir ein See oder ein Meer genutzt wird, wird das Wasser durch Umwelteinflüsse auf einer zumindest weitgehend konstanten Temperatur T2 gehalten Das Wasser gelangt über die Zulaufleitung 31 in den Speicher 12 (vgl. Fig. 5). Im Bodenbereich des Speichers 12 ist ein Auslass 32 vorgesehen. Darüber hinaus ist der Speicher 12 vorzugsweise aus korrosionsbeständigem Material, wie Edelstahl oder formsteifem, thermoplastischen Kunststoff gefertigt.

Die Temperatur der beiden Speicher 11, 12 wird mit Hilfe von nicht gezeigten, vorzugsweise drahtlosen Temperatur-Sensoren überwacht.

Bei einem Verfahren zur Energiegewinnung durch Umwandlung von Wärme in mechanische oder elektrische Energie in einem Antriebssystem mit Hilfe eines in einem Zylinder platzierten Metallelementes, welches eine Formgedächtnis-Charakteristik aufweist und einer uniaxialen Kontraktion ausgesetzt ist, muss die Temperatur T1 einen Wert erreichen, bei dem die Nitinolfeder 20 aktiviert wird.

Durch eine Temperaturdifferenz wird die Aktivierung der Nitinolfeder 20 beendet, so dass die Nitinolfeder ihre ursprüngliche Lage mit Hilfe der Rückstellfeder 17 annimmt. Ein zyklischer Pumpvorgang wird durch den sich hin- und her bewegenden Zylinderkolben 15 realisiert, an dem das Metallelement 20 befestigt ist. Der Pumpvorgang wird über ein fluidisches Medium gesteuert, indem eine Ventilsteuerung 26 durch den Hub der Kolbenstange 13 betätigt wird.

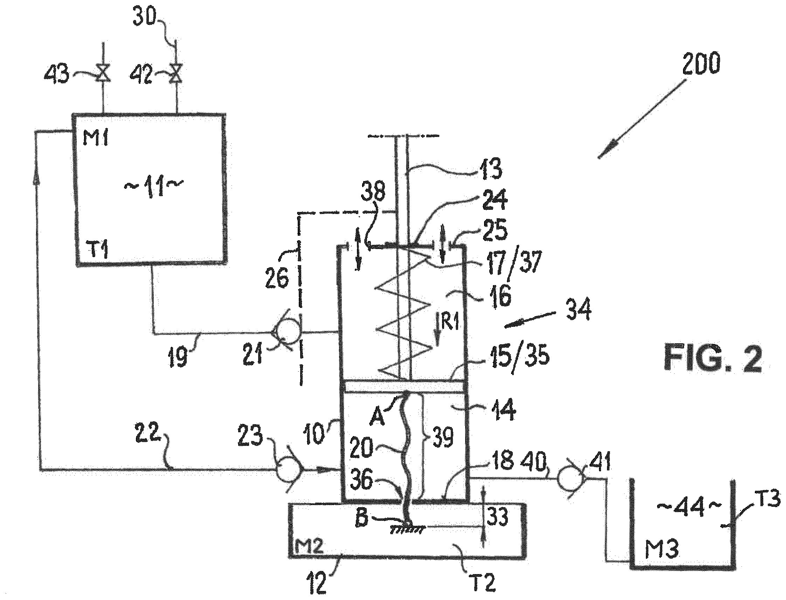

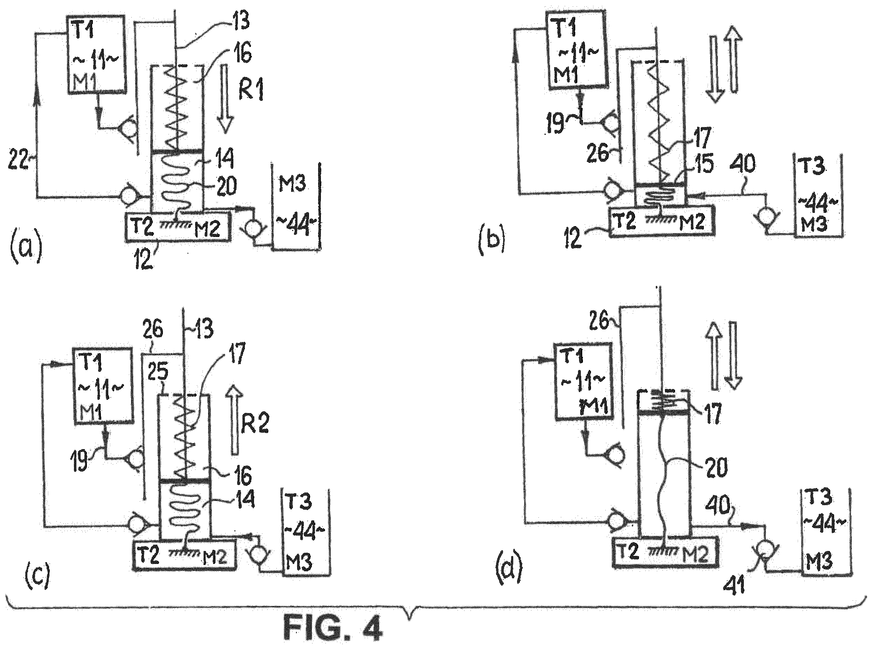

Allerdings kann eine zu große Temperaturdifferenz zwischen den Medien M1, M2 leistungsmindernd wirken, da die Aufheizphase länger dauern kann. Aus diesem Grund kann ein zusätzlicher, dritter Speicher 44 (vgl. Figuren 2 und 4) für ein drittes Medium M3 vorgesehen sein, welcher Bestandteil eines in Fig. 2 dargestellten Antriebssystems 200 ist. Sonst umfasst das Antriebssystem 200 alle Elemente des Antriebssystems 100. Der dritte Speicher 44 ist über eine Leitung 40 mit dem Zylinderraum 14 verbunden. An der Leitung 40 ist ein Ventil 41, hier: Rückschlagventil vorgesehen.

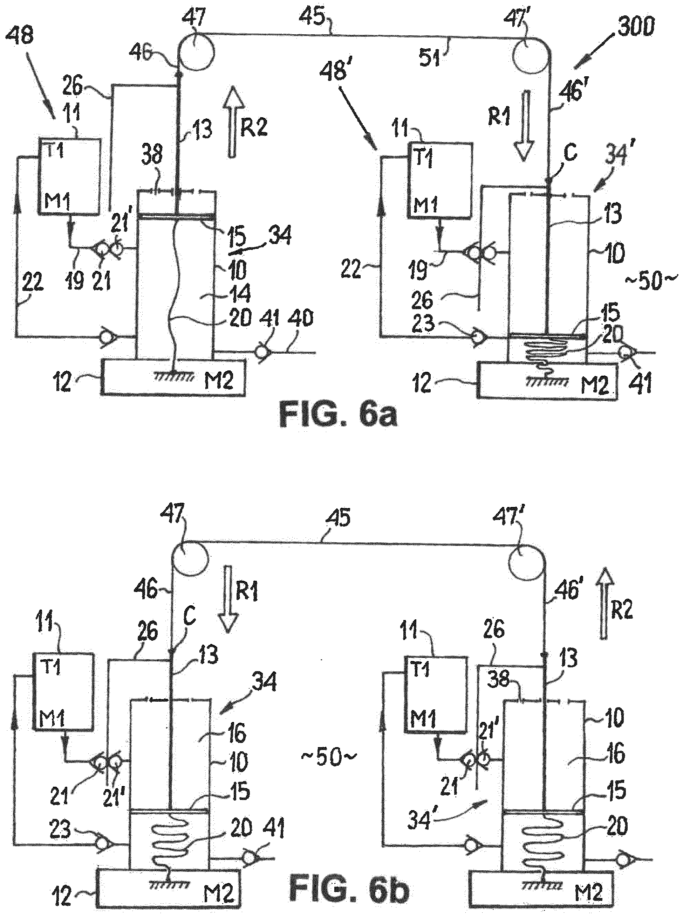

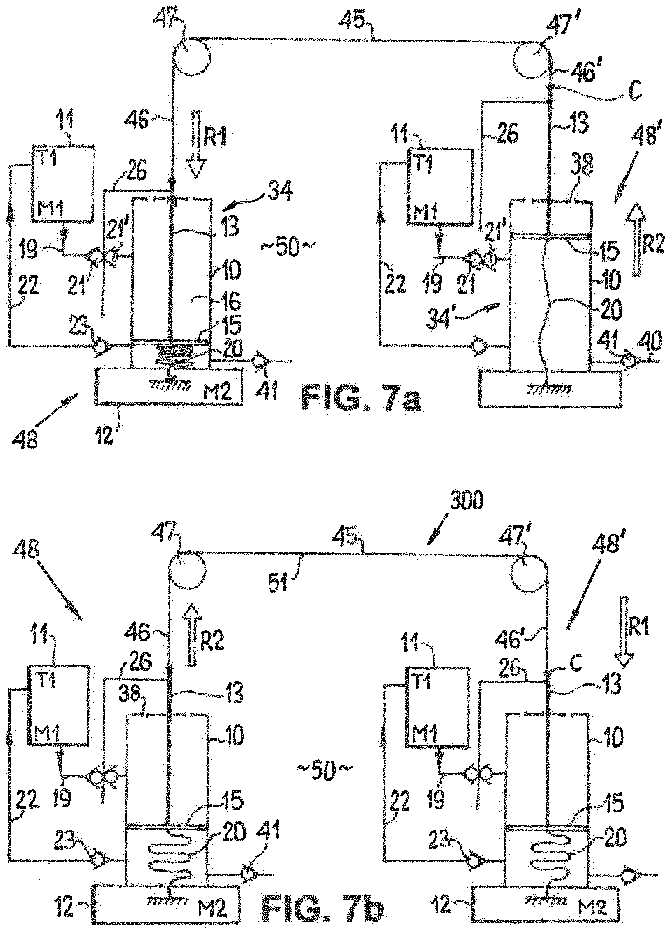

Ein in Figuren 6a und 6b sowie in Figuren 7a und 7b dargestelltes Antriebssystem 300 umfasst zwei aneinander über ein Seil 45 gekoppelte Antriebsaggregate 48, 48'. Die Antriebsaggregate 48, 48' sind jeweils dem in Fig. 1 gezeigten Antriebsaggregat 49 ähnlich, mit dem Unterschied, dass anstelle des Federelementes 17 ein koaxial an die Kolbenstange 13 angeschlossener, veränderlicher Seilabschnitt 46, 46' vorgesehen ist. Die Seilabschnitte 46, 46' werden jeweils von einem Verbindungspunkt C am freien Ende der Kolbenstange 13 geradlinig zu einer Umlenkrolle 47, 47` geführt. Das Seil 45 ist gebildet durch die beiden Seilabschnitte 46, 46' und einen sich zwischen den Umlenkrollen 47, 47' erstreckenden konstanten Mittelabschnitt 51 aus, derart, dass die Gesamtlänge des Seils 45 immer gleich ist. Die Kolbenstange 13 samt Seilabschnitt 46, 46' entspricht funktionell dem Rückstellelement.

Die beiden Speicher 11 können miteinander verbunden sein oder durch einen gemeinsamen Speicher (nicht dargestellt) ersetzt werden. Dies gilt ebenso für beide das Medium M2 enthaltende Speicher 12.

### Funktionsweise (vgl. Fig. 3):

Die Fig. 3 zeigt die Phasen eines Kreisprozesses bei dem die Nitinolfeder 20 durch ein warmes Medium M1 aktiviert wird. Die Phase (a) veranschaulicht die Bewegung des Zylinderkolbens 15 mit der Kolbenstange 13 in Richtung R1, d. h. in Richtung Speicher 12. Die am Verankerungspunkt B befestigte Nitinolfeder 20 kontaktiert dort mit dem kalten Medium M2, welches bewirkt, dass der Zylinderkolben 15 bis zu seiner Endlage, vgl. Phase (b), bewegt wird. Dabei drückt die aktivierte Nitinolfeder 20 das aktivierende Medium M1 durch die zweite Rohrleitung 22 in den Speicher 11. Gleichzeitig wird die Nitinolfeder 20 in das im Speicher 12 befindliche Medium M2 gedrückt.

Zu Beginn der Kolbenbewegung in Richtung R1 wird über eine Ventilsteuerung 26 die Leitung 19 geschlossen. Das im Speicher 11 befindliche Medium M1 kann somit nicht mehr entweichen. In den Zylinderraum 16 gelangt durch die Öffnungen 38 das im Außenbereich 50 befindliche Medium. Gleichzeitigt drückt der Zylinderkolben das im Zylinderraum 14 befindliche Medium M1 durch die Leitung 19 in den Speicher 11 und streckt das Federelement 17. Wesentlich ist, dass das Federelement 17 eine Federkennlinie aufweist, die eine Streckung durch die Nitinol-Feder 20 ermöglicht. Die Zugkraft der sich zusammenziehenden Nitinol-Feder 20 muss also größer sein als die Rückstellkraft des Federelements 17.

Der sich in Richtung R1 bewegende Zylinderkolben 15 übt eine Druckkraft auf das im Zylinderraum 14 befindliche Medium M1 aus.

Da die Leitung 40 durch ein Rückschlagventil 41 geschlossen ist, kann das Medium M1 nur über die Leitung 22 entweichen. Das in Leitung 22 befindliche Ventil 23 lässt den Durchfluss in Richtung Speicher 11 zu und sperrt die Leitung in entgegengesetzter Flussrichtung. Durch die Leitung 22 gelangt das Medium M1 in den Speicher 11, dessen Rohrleitung 19 in dieser Arbeitsphase durch die Ventilsteuerung 26 geschlossen ist. Das gasförmige Medium M1 wird somit im Speicher 11 komprimiert.

Der Zylinderkolben 15 mit Schraubenzugfeder 17 hat nicht nur die Funktion, sich innerhalb des Zylinders 10 zu bewegen. Eine wichtige Aufgabe des Zylinderkolbens 15 ist das Pumpen des Mediums innerhalb des Antriebssystems 100. So kann der ganze thermodynamische Vorgang gesteuert werden.

Das Ende von Phase (a) und der Beginn von Phase (b) ist erreicht, wenn der Zylinderkolben 15 seine untere Endlage erreicht hat. Das Federelement 17 (Schraubenzugfeder) ist dann maximal gestreckt und zieht jetzt den Zylinderkolben 15 wieder nach oben, d. h. in Richtung R2 bzw. Zylinderdeckel 25. Die Nitinolfeder 20 wird durch die Schraubenzugfeder 17, wie die Phase (c) zeigt, solange auseinandergezogen, bis der Zylinderkolben 15 seine maximale obere Position unterhalb des Zylinderdeckel 25, wie die Phase (d) zeigt, erreicht.

Die zum Auseinanderziehen der Nitinolfeder 20 erforderliche Kraft ist kleiner als die Zugkraft der Schraubenzugfeder 17. Die Kraft, die für die Verformung bei niedrigen Temperaturen aufgebracht werden muss, ist ungleich kleiner, als die Kraft, die beim Einnehmen der ursprünglichen, beispielsweise geraden Form der Nitinolfeder 20 abgegeben wird.

In der Endlage des in der Phase (b) befindlichen Zylinderkolbens 15 kann die Nitinolfeder 20 vollständig in den Speicher 12 eintauchen, wenn die Nitinolfeder 20 an einem nicht gezeigten, an der Unterseite des Zylinderkolbens 15 platzierten Distanzelement befestigt ist. Wie die Fig. 3, Phase b) zeigt, ist am Zylinder 10 ein vorzugsweise federunterstützter Arretierungsbolzen 61 vorgesehen, mit welchem der Zylinderkolben 15 in seiner untersten Lage gehalten und freigegeben wird. Der Arretierungsbolzen 61 wird vorzugsweise digital gesteuert. Ein solcher Arretierungsbolzen kann auch in der oberen Endlage vorgesehen sein. Die Funktion dieses Arretierungsbolzens in der oberen Endlage entspricht der des Arretierungsbolzens in der unteren Endlage mit dem Unterschied, dass der obere Arretierungsbolzen die vollständige Durchwärmung der Nitinolfeder gewährleisten soll, während es bei dem unteren Arretierungsbolzen die vollständige Durchkühlung sein soll

Alternativ hierzu ist auch der Einsatz anderer Steuerungen, beispielsweise einer zeitgesteuerten Taktung oder eine Steuerung auf Basis von Kontaktbeziehungsweise Näherungssensoren, möglich.

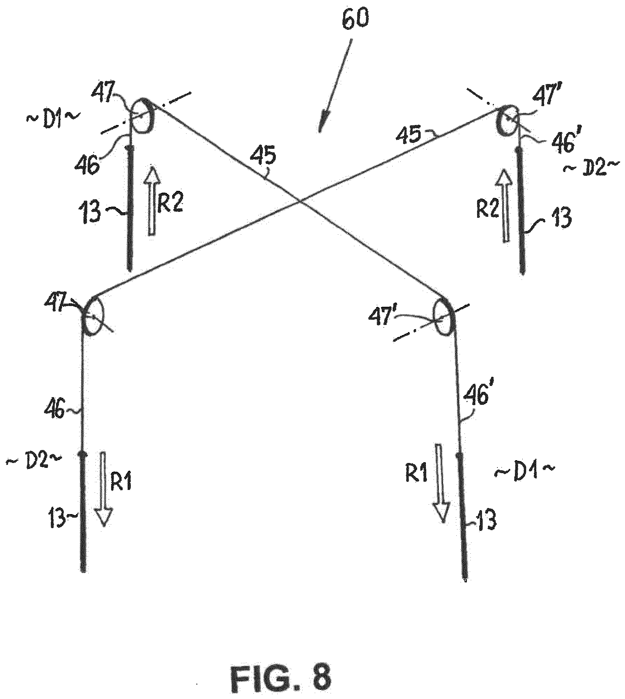

Der Einsatz des steuerbaren Arretierungsbolzens 61 verbessert die Synchronisation der in einer vorbestimmten Reihenfolge temporal geordnet ablaufenden Vorgänge, daher ist der Einsatz steuerbarer Arretierungsbolzen besonders vorteilhaft bei einer aus mehreren Antriebsaggregaten bestehenden Antriebseinheit 60 (vgl. Fig. 8).

In Arbeitsphase (c) bewegt sich der Zylinderkolben 15, gezogen von dem Federelement 17, in Richtung R2 und zieht dabei das im Außenbereich 50 befindliche Medium durch die Leitung 40 in den Zylinderraum 14. Gleichzeitig wird die Nitinolfeder 20 gestreckt. Wie bereits erwähnt ist der zur Streckung der Nitinolfeder 20 erforderliche Kraftbedarf kleiner als die Zugkraft des Federelements 17. Aus dem Speicher 11 kann kein Medium in den Zylinderraum 14 gelangen, da die Rohrleitung 22 in dieser Phase durch das Ventil 23 geschlossen ist. Das im Zylinderraum 16 befindliche Medium wird durch die Öffnungen 38 in den Außenbereich gedrückt.

Das Ende von Phase (c) und der Beginn von Phase (d) ist erreicht, wenn der Zylinderkolben 15 seine obere Endlage erreicht hat. Die Ventilsteuerung 26 gibt den Zugang der Leitung 19 zum Zylinder 10 frei. Da der Zylinderkolben 15 sich zu diesem Zeitpunkt oberhalb des Zugangs der Leitung 19 befindet kann das zweite Medium, je nach Steuerungseinstellung, entweder aus dem Speicher 11 über die Leitung 19 oder aus dem Außenbereich 50 bzw. aus dem zusätzlichen Speicher 44 über die Leitung 40 und das Ventil 41 in den Zylinderraum 14 gelangen.

### Funktionsweise (vgl. Fig. 4):

Grundsätzlich sind die Vorgänge des Kreislaufprozesses ähnlich den des Kreislaufprozesses gemäß Fig. 3.

In der Phase (a) zieht sich die Nitinolfeder 20, aktiviert durch das im Zylinderraum 14 enthaltene Medium M1 mit der Temperatur T1, zusammen. Das im Zylinderraum 14 enthaltene Medium M1 wird durch den Zylinderkolben 15 in Richtung Boden 18 gedrückt und gelangt durch die Leitung 22 zurück in den Speicher 11. Hierbei wird die Leitung 40 zum dritten Speicher 44 mit dem Medium M3 durch das Ventil 41 verschlossen gehalten.

In der Phase (b) ist die Nitinolfeder 20 maximal zusammengezogen und befindet sich in Endposition. Bei Beginn der durch die Zugfeder 17 bewirkten Aufwärtsbewegung des Zylinderkolbens 15 wird das Ventil 41 geöffnet. Im Zylinderraum 14 entsteht durch die Aufwärtsbewegung des Zylinderkolbens 15 ein Unterdruck, der Medium M3 aus dem dritten Speicher 44 über die Leitung 40 in den Zylinderraum 14 strömen lässt.

In der Phase (c) wird der Zylinderkolben 15 in Richtung Zylinderdeckel 25 gezogen, wobei in den Zylinderraum 14 das Medium M3 aus dem zusätzlichen Speicher 44 eingesogen wird. Es entsteht also kein Vakuum beim Hochziehen des Zylinderkolbens 15 und auch das zweite Medium M2 wird durch die Durchgangsöffnung 36 für die Nitinolfeder 20 nicht nach oben gesogen.

In der Phase (d) befindet sich der Zylinderkolben 15 in seiner oberen Endstellung. Das erste Medium M1 gelangt aus dem Speicher 11 durch die Leitung 22 in den Zylinderraum 14 unterhalb des Zylinderkolbens 15. Das Medium M3 fließt durch die Leitung 40, die jetzt geöffnet ist, zurück in den Speicher 44. Wenn das Medium M3 vollständig abgeflossen ist, wird die das Ventil 41 und damit die Leitung 40 geschlossen, die Nitinolfeder 20 zieht sich zusammen und zieht den Zylinderkolben 15 in Richtung Boden 18, so dass das Medium M1 wieder in den Speicher 11 gedrückt wird.

Bei dem Antriebssystem 200 werden nicht miteinander mischbare Medien eingesetzt, beispielsweise: M1 = Gas; M2 = Wasser; M3 = Öl. Dabei gelten folgende Ungleichungen für die Temperaturen der Medien: T1 > T3 > T2 und deren Wichte (spezifisches Gewicht): W1 < W3 < W2. Das Medium M1 (Gas) weist eine Temperatur T1 und eine Wichte W1 auf. Analog dazu beziehen sich die Temperatur T2 und die Wichte W2 auf das zweite Medium (Wasser) und die Temperatur T3 und die Wichte W3 auf das dritte Medium (Öl).

Wie aus obiger Ungleichung hervorgeht, ist die Temperatur T3 des dritten Mediums M3 größer als die Temperatur des zweiten Mediums T2. Durch den im Zylinderraum 10 während der Aufwärtsbewegung des Zylinderkolbens aus der unteren in die obere Endlage erzeugten Unterdruck gelangt das dritte Medium M3 durch die Leitung 40 in den Zylinderraum 14. Da die Temperatur T3 des Mediums M3 zwischen den Temperaturen T1 und T2 liegt wird der Aktivierungsprozess der Nitinolfeder 20 beschleunigt.

Die Energie für das Antriebssystem 100; 200 liefert die zugeführte Abwärme. Der Temperaturunterschied zwischen den beiden Medien M1, M2 in den Speichern 11, 12 bleibt nahezu konstant. Die Eigenschaften der Nitinolfeder 20 ermöglichen dabei so schnell ablaufenden Vorgänge, dass die Zeit für einen Temperaturausgleich innerhalb des Systems nicht ausreicht.

Die Speicher 11, 12 und der zusätzliche Speicher 44 für das dritte Medium 3 sind entweder räumlich so angeordnet, dass sie sowohl entsprechend ihrer zugrundeliegenden Energiequelle und eines energetisch verlustarmen Kreislaufs günstig angeordnet sind, als auch die Möglichkeit besitzen, z. B. durch Ausbildung als Wärmetauscher die jeweilige Energie aufzunehmen.

An der Kolbenstange 13 und/oder im Speicher 11 wird letztliche Energie gewonnen, die aus der eingeführten Abwärme zur Verfügung gestellt wird.

### Funktionsweise beim Einsatz mehrerer Antriebsaggregate (vgl. Figuren 6a bis 8):

Es gelten grundsätzlich alle bereits bei der Funktionsbeschreibung der Figuren 3 und 4 erläuterten Vorgänge und Details, außer bzgl. des Federelements 17.

Die Fig. 8 zeigt eine mögliche Konfiguration von vier Zylinderkolben 15 in getrennten Zylindern 10, bei welcher vier in den Figuren 6a und 7a gezeigte Antriebsaggregate zu einer Antriebseinheit 60 eingesetzt werden. Um eine Koppelung zu erzielen, müssen sich die Antriebsaggregate nicht unbedingt einander überkreuzen. Sie können auch hintereinander angeordnet sein.

Zur besseren Veranschaulichung sind in Fig. 8 lediglich zwei Paare von Kolbenstangen 13 mit Seilen 45 und Umlenkrollen 47, 47' gezeigt, welche auch in den Figuren 6a und 7a zu sehen sind. Die Mittelabschnitte 51 der Seile sind zueinander rechtwinklig angeordnet. Die übrigen Teile der Antriebsaggregate sind nicht dargestellt.

Gemäß Fig. 6a befindet sich der Zylinderkolben 15 in seiner oberen Endlage (linke Seite der Figur). Die Ventilsteuerung 26 gibt den Zugang der Leitung 19 zum Zylinder 10 frei. Die Nitinolfeder 20 hat ihre maximale Länge, dagegen hat der Seilabschnitt 46 sein kürzestes Maß erreicht. Der oberen Endlage des Zylinderkolbens 15 entspricht der unteren Endlage des zweiten Zylinderkolbens 15 im zusammenwirkenden Antriebsaggregat 48' (rechte Seite der Fig. 6a), bei der die nebeneinander liegenden Ventile 21, 21' gesperrt sind. Der Seilabschnitt 46` hat seine maximale Länge erreicht. Die Nitinolfeder 20 ist nahezu vollständig in den Speicher 12 eingetaucht. Die obere und die untere Endlagen der Zylinderkolben 15 bzw. Kolbenstangen 13 entsprechen einer in Fig. 8 mit "D1" angedeuteten Position.

Gemäß Fig. 7a befindet sich der Zylinderkolben 15 in seiner unteren Endlage (linke Seite der Figur). bei der die nebeneinander liegenden Ventile 21, 21` gesperrt sind. Der Seilabschnitt 46 hat seine maximale Länge erreicht. Die Nitinolfeder 20 ist zusammengedrückt und nahezu vollständig in den Speicher 12 eingetaucht. Der unteren Endlage des "linken" Zylinderkolbens 15 bzw. der Kolbenstange 13 entspricht die obere Endlage des "rechten" Zylinderkolbens 15 bzw. der Kolbenstange 13 im zusammenwirkenden Antriebsaggregat 48' (rechte Seite der Fig. 7a). Der Seilabschnitt 46` hat sein kürzestes Maß erreicht. Die obere und die untere Endlagen der Zylinderkolben 15 bzw. Kolbenstangen 13 entsprechen einer in Fig. 8 mit "D2" angedeuteten Position.

Die Figuren 6b und 7b zeigen jeweils eine momentane Arbeitslage der beiden Zylinderkolben 15 nach dem Verlassen ihrer Endlagen in beiden Zylindern 10. Die beiden Zylinderkolben 15 bewegen sich, gezogen durch das Seil 45 in Richtung R1 bzw. R2 und ziehen dabei das im Außenbereich 50 befindliche Medium durch die jeweilige Leitung 40 in den Zylinderraum 14. Beispielsweise zieht sich die erwärmte Nitinolfeder 20 (Fig. 7b, rechts) zusammen und streckt die abgekühlte Nitinolfeder 20 (Fig. 7b, links). Die Seilabschnitte 45, 46, 46' übertragen die Zugkraft der sich zusammenziehenden, rechten Nitinolfeder 20 auf die linke Nitinolfeder 20. Dabei ist der zur Streckung der Nitinolfeder 20 erforderliche Kraftbedarf kleiner als die Zugkraft des Seils 45. Das Ventil 23 (linke Seite der Fig. 7b) ist geschlossen, das rechte Ventil 23 ist offen. Das Medium im Zylinderraum 16 wird durch die Öffnungen 38 in den Außenbereich gedrückt.

In die Leitung 19 sind zwei Ventile 21, 21' eingebaut. Das eine Ventil 21 öffnet in der oberen Endlage des Zylinderkolbens 15, bei der die Ventilsteuerung 26 den Zugang der Leitung 19 zum Zylinder 10 freigibt. Das andere Ventil 21` steuert und koordiniert den Hubwechsel zwischen den beiden Antriebsaggregaten 48, 48' in dieser oberen Endlage. Das Ventil 21` ist temperaturgesteuert und öffnet erst, wenn die Nitinolfeder 20 im Speicher 12 des anderen, zusammenwirkenden Antriebsaggregats eine bestimmte, einstellbare Temperatur T unterschritten hat. Damit wird verhindert, dass die zusammengezogene Nitinolfeder 20 im Medium M2 schon wieder auseinandergezogen wird, bevor sie eine bestimmte Abkühltemperatur erreicht hat. Anstelle der zwei Ventile 21, 21` kann auch ein anderes Ventil zum Einsatz kommen, welches beide ineinander vereint.

Die Temperatursteuerung erfolgt durch direkte Messung der Temperatur an der im Medium 2 eingetauchten Nitinolfeder 20 mit Hilfe eines elektrischen oder elektronischen Temperatursensors. Es können auch mechanische Temperaturfühler, wie Bimetall-Regelthermostate, zum Einsatz kommen. Je nach Auswahl des Temperaturfühlers ist daher eine Auslösung des zweiten Ventils 21' mechanisch oder elektrisch bzw. elektronisch möglich.

Als Alternative zur direkten Messung an der im Medium M2 eingetauchten Nitinolfeder 20 kommt auch ein direkt am Ventil angeordneter Temperaturregler in Frage, welcher den Abkühlverlauf der Nitinolfeder im Medium M2 widerspiegelt, so dass keine Verbindung zur Nitinolfeder 20 erforderlich ist.

Bei den vorstehend beschriebenen Ausführungen zieht sich die erwärmte Nitinolfeder 20 zusammen und zieht sich dabei von selbst in das kalte Medium M2. Es wird vorausgesetzt, dass die Abkühldauer der Nitinolfeder 20 im Medium M2 länger dauert als die Zeit des Zusammenziehens der Nitinolfeder 20, bedingt durch deren Wärmehysterese, sonst könnte der zuerst in Medium M2 eintauchende Nitinolfederanteil durch die Rückholfeder schon wieder auseinandergezogen werden, bevor das komplette Eintauchen der Nitinolfeder in Medium M2 beendet wäre. Außerdem überfährt der Zylinderkolben 15 ständig die am Zylinder 10 befindliche Öffnung 58, was auf Dauer zur Schädigung der Zylinderkopfdichtungen führen könnte.

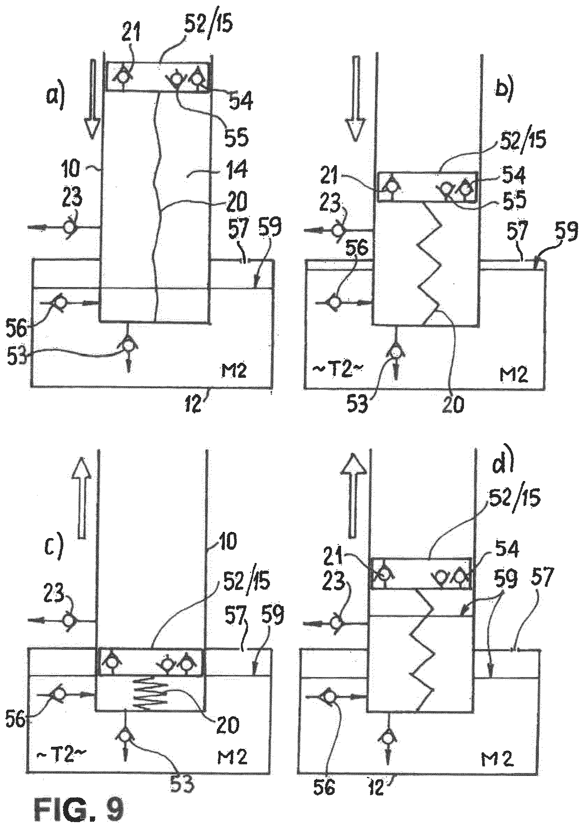

Mit der Ausführung gemäß Fig. 9 lassen sich die Nachteile vermeiden. Die Einbringung von Medium M1 in der oberen Endlage (des Zylinderkolbens 15) erfolgt durch den Zylinderkolben 15 selbst, welcher wenigstens ein Ventil 21; 54, 55 umfasst.

Vorzugsweise ist der Zylinderkolben 15 hohl und bildet einen Hohlkörper 52 aus.

In der Phase (a) ist die Nitinolfeder 20 auseinandergezogen. Durch das Ventil 21 gelangt das Medium M1 in den Zylinderraum 14 unterhalb des Zylinderkolbens 15. Gleichzeitig öffnet das Ventil 53, so dass das Medium M2 aus dem Zylinderraum 14 abfließen kann. Dabei sorgt eine Öffnung 57 an der oberen Wand des Speichers 12 für Druckausgleich.

In der Phase (b) wird die Nitinolfeder 20 durch das Medium M1 erwärmt und zieht sich zusammen. Das Medium M1 entweicht dann durch das Ventil 23 in den Speicher 11 und das Medium M2 wird durch die Kompression vom Medium M1 durch das Ventil 53 aus dem unteren Zylinderraum 14 herausgedrückt. Das Ventil 53 schließt und verhindert das Austreten von Medium M1. Hier kann eine übliche Füllstandmessung bzw. Durchflussbegrenzung eingesetzt werden.

In der Phase (c) ist die Nitinolfeder 20 maximal zusammengezogen. Das Ventil 56 öffnet und lässt das kältere Medium M2 in den Zylinderraum 14. Das Ventil 55 am Hohlkörper 52 öffnet und lässt verdrängtes Medium M1 ins Innere dieses Hohlkörpers entweichen. Der hohle Zylinderkolben 15 (Hohlkörper 52) hat vorzugsweise eine Aufnahmekapazität, welche dem verbleibenden Volumen des Zylinderraums 14 entspricht, wenn die Nitinolfeder maximal zusammengezogen ist.

In der Phase (d) wird die kalte Nitinolfeder 20 durch das Rückstellelement 37 (bzw. Federelement 17) auseinandergezogen. Dabei bleibt das Ventil 56 offen und sorgt für den Unterdruckausgleich. Danach öffnet das am Hohlkörper 52 angeordnete Ventil 54, welches den Unterdruckausgleich unterstützt. Es ist auch möglich, den Unterdruckausgleich auch durch das an der Leitung 40 befindliche Ventil 41 zu erwirken. Der verbleibende Zylinderraum 14 wird mit Medium M2 geflutet. Mit "59" wird die Pegelhöhe (Niveau) des kälteren Mediums M2 in allen Phasen bezeichnet.

Insgesamt ermöglicht die Ausführung gemäß Fig. 9 eine Verbesserung der Prozessstabilität.

Soll das wärmere Medium M1 gasförmig sein, so besteht die Möglichkeit, das Volumen des Speichers 11 zu minimalisieren. Beispielsweise kann der Speicher 11 im Zylinder 10 integriert sein unter Beibehaltung von oberen Öffnungen 38.

Es wird eine adiabatische Expansion realisiert, so dass die innere Energie des Mediums in nutzbare mechanische Arbeit umgewandelt werden kann.

**Bezugszeichenliste**

| | | | |
|---|---|---|---|
| 10 | Zylinder | 43 | Überdruckventil |
| 11 | erster Speicher (Medium 1) | 44 | dritter Speicher (Medium 3) |
| 12 | zweiter Speicher (Medium 2) | 45 | Seil |
| 13 | Kolbenstange | 46, | 46'Seilabschnitt |
| 14 | Zylinderraum | 47, 47' | Umlenkrolle |
| 15 | Zylinderkolben | 48, 48' | Antriebsaggregat |
| 16 | Zylinderraum | 49 | Antriebsaggregat |
| 17 | Federelement | 50 | Außenbereich |
| 18 | Zylinderboden | 51 | Mittelabschnitt |
| 19 | erste Rohrleitung | 52 | Hohlkörper |
| 20 | Metallelement (Nitinol-Feder) | 53 | Ventil |
| 21, 21' | Ventil | 54 | Ventil |
| 22 | zweite Rohrleitung | 55 | Ventil |
| 23 | Ventil | 56 | Ventil |
| 24 | Dichtungselement | 57 | Öffnung |
| 25 | Zylinderdeckel | 58 | Öffnung (am 10) |
| 26 | Ventilsteuerung | 59 | Niveau des Mediums M2 |
| 27 | Kolbendichtung | 60 | Antriebseinheit |
| 28 | Gehäuse | 61 | Arretierungsbolzen |
| 29 | Innenwand | | |
| 30 | Leitung | 100 | Antriebssystem |
| 31 | Zulaufleitung | 200 | Antriebssystem |
| 32 | Auslass | 300 | Antriebssystem |
| 33 | Teilbereich | | |
| 34, 34' | Gehäuse | A | Verankerungspunkt (am |
| 35 | Betätigungselement | | Kolben) |
| 36 | Durchgangsöffnung | B | Verankerungspunkt (im |
| 37 | Rückstellelement | | Speicher 12) |
| 38 | Öffnung | C | Verbindungspunkt |
| 39 | Teilbereich | | (Kolbenstange 13 mit |
| 40 | Leitung | | Seilabschnitt 46) |
| 41 | Ventil | M1, M2, M3 | Medium |
| 42 | Ventil | R1 | Richtung |
| R2 | Richtung | | |
| T1, T2, T3 | Temperatur (des Mediums) | | |
| W1, W2, W3 | Wichte | | |
| (a) | Phase des Kreisprozesses | | |
| (b) | Phase des Kreisprozesses | | |
| (c) | Phase des Kreisprozesses | | |
| (d) | Phase des Kreisprozesses | | |

## Patentansprüche

1. Antriebssystem (100; 200; 300), basierend auf zyklischer Umwandlung von thermischer in mechanische oder elektrische Energie durch Ausnutzung einer Temperaturdifferenz zwischen wenigstens zwei Medien (M1, M2) und der Kontraktion eines Metallelementes (20) mit Formgedächtnis-Charakteristik, umfassend:
- wenigstens ein Antriebsaggregat (48, 48'; 49), welches ein Gehäuse (34; 34`) mit wenigstens einem innerhalb des Gehäuses (34, 34`) platzierten Metallelement (20) umfasst,
- wenigstens ein innerhalb des Gehäuses (34; 34`) befindliches Rückstellelement (37),
- wenigstens ein bewegliches Betätigungselement (35), mit dem das Metallelement (20) und das Rückstellelement (37) gekoppelt sind,
- wobei das Metallelement (20) und das Rückstellelement (37) durch ein gasförmiges oder flüssiges Medium umströmt wird,
**dadurch gekennzeichnet, dass**
- das Antriebsaggregat (48, 48'; 49) wenigstens einen ersten Speicher (11) enthaltend ein erstes gasförmiges oder flüssiges Medium (M1) und wenigstens einen zweiten Speicher (12) enthaltend ein zweites gasförmiges oder flüssiges Medium (M2) umfasst, wobei die ersten und zweiten Medien unterschiedliche Temperaturen aufweisen, wobei der zweite Speicher (12) eine Durchgangsöffnung (36) zur direkten Verbindung des zweiten Speichers (12) mit einem Zylinderraum (14) durch einen Boden (18) des Gehäuses (34, 34') aufweist,
- das Gehäuse (34, 34`) ein Zylinder (10) ist, welcher einen flüssigkeits- und gasdicht angeordneten Zylinderkolben (15) beinhaltet und wobei der Zylinderkolben (15) das Betätigungselement (35) ausbildet,
- der Zylinderkolben (15) den Zylinder (10) in zwei voneinander getrennte Zylinderräume (14, 16) teilt, von denen der eine, von dem Boden (18) begrenzte, erste Zylinderraum (14) das Metallelement (20) mit Formgedächtnis-Charakteristik und der andere, zweite Zylinderraum (16) das Rückstellelement (37) beinhaltet,
- wobei das Metallelement (20) an einem Befestigungspunkt (A) an dem Zylinderkolben (15) und an einem innerhalb des zweiten Speichers (12) angeordneten Befestigungspunkt (B) verankert ist, so dass ein Teilbereich (33) des Metallelements (20) mit dem zweiten gasförmigen oder flüssigen Medium (M2) des zweiten Speichers (12) und ein Teilbereich (39) mit dem ersten gasförmigen oder flüssigen Medium (M1) im ersten Zylinderraum (14) in Kontakt stehen.

2. Antriebssystem (100; 200; 300) nach Anspruch 1, **dadurch gekennzeichnet, dass**
- der erste Speicher (11) über eine erste Rohrleitung (19) mit dem zweiten, das Rückstellelement (37) enthaltenden Zylinderraum (16) verbunden ist, wobei in die Rohrleitung (19) wenigstens ein erstes Ventil (21, 21') eingebaut ist,
- der erste Speicher (11) über eine zweite Rohrleitung (22) mit dem ersten, das Metallelement (20) enthaltenden Zylinderraum (14) verbunden ist, wobei in die Rohrleitung (22) wenigstens ein zweites Ventil (23) eingebaut ist.

3. Antriebssystem (100; 200; 300) nach Anspruch 1 oder 2, **dadurch gekennzeichnet, dass** der Zylinderraum (14) über eine weitere Leitung (40) mit einem dritten Speicher (44) verbunden ist, wobei der dritte Speicher (44) zur Aufnahme eines dritten gasförmigen oder flüssigen Mediums (M3) vorgesehen ist,
so dass dann, wenn das dritte Medium (M3) eine Temperatur (T3) aufweist, die kleiner als die erste Temperatur (T1) des ersten Mediums (M1) und größer als die zweite Temperatur (T2) des zweiten Mediums (M2) ist, der im Zylinderraum (14) befindliche Teil des Metallelements (20) bei Bewegung des Zylinderkolbens (15) in Richtung (R2) vorgewärmt wird und sich hierdurch die Hubfrequenz und damit die Leistung des Antriebsystems (100; 200; 300) erhöht.

4. Antriebssystem (100; 200; 300) nach einem der Ansprüche 1 bis 3, **dadurch gekennzeichnet, dass** eine Ventilsteuerung (26) vorgesehen ist, die das erste Ventil (21, 21') durch einen Hub einer mit dem Zylinderkolben (15) direkt oder indirekt verbundenen Kolbenstange (13) steuert.

5. Antriebssystem (100; 200) nach einem der Ansprüche 1 bis 4, **dadurch gekennzeichnet, dass** das Rückstellelement (37) eine Feder (17), bevorzugt eine Zugfeder ist.

6. Antriebssystem (100; 200) nach einem der Ansprüche 1 bis 5, **dadurch gekennzeichnet, dass** der Zylinderkolben (15) ein Hohlkörper (52) ist, welcher wenigstens ein Ventil (21'; 60, 61) umfasst.

7. Antriebssystem (100; 200) nach einem der Ansprüche 1 bis 6, **dadurch gekennzeichnet, dass** der erste Speicher (11) innerhalb des zweiten Zylinderraums (16) angeordnet ist.

8. Antriebssystem (300) nach einem der Ansprüche 1 bis 7, **dadurch gekennzeichnet, dass** das Rückstellelement (37) durch die Kolbenstange (13) und einen an die Kolbenstange (13) koaxial angeschlossenen Seilabschnitt (46, 46`) ausgebildet ist, wobei der Seilabschnitt (46, 46') translatorisch bis zu einer Umlenkrolle (47, 47`) bewegbar ist.

9. Antriebssystem 100; 200; 300) nach einem der Ansprüche 1 bis 8 **dadurch gekennzeichnet, dass** die Medien (M1, M2, M3) der Speicher (11; 12; 44) miteinander nicht mischbar sind und/oder unterschiedliche Wichten (W1, W2, W3) aufweisen.

10. Antriebssystem (100; 200; 300) nach einem der Ansprüche 1 bis 9, **dadurch gekennzeichnet, dass** wenigstens ein Speicher (11; 12; 44) thermisch isoliert ist

11. Antriebssystem (300) nach einem der Ansprüche 1 bis 10, **dadurch gekennzeichnet, dass** mehrere Antriebssysteme (100; 200) aneinander gekoppelt sind und die Bewegung der Zylinderkolben (15) durch eine Steuerungseinrichtung koordiniert wird.

12. Antriebssystem (300) nach Anspruch 11, **dadurch gekennzeichnet, dass** als Steuerungseinrichtung eine obere und/oder untere Endlagensteuerung der Zylinderkolben (15) vorgesehen ist, welche vorzugsweise einen federunterstützten Arretierungsbolzen (61) zur Fixierung umfasst.

## Claims

1. Drive system (100; 200; 300) based on cyclic conversion of thermal energy into mechanical or electrical energy by exploiting a temperature difference between at least two media (M1, M2) and the contraction of a metal element (20) with shape memory properties, comprising:
- at least one drive assembly (48, 48'; 49) comprising a housing (34; 34') with at least one metal element (20) placed within the housing (34, 34'),
- at least one restoring element (37) located inside the housing (34; 34'),
- at least one movable actuating element (35) to which the metal element (20) and the restoring element (37) are coupled,
- wherein a gaseous or liquid medium flows around the metal element (20) and the restoring element (37),
**characterised in that**
- the drive assembly (48, 48'; 49) comprises at least one first store (11) containing a first gaseous or liquid medium (M1) and at least one second store (11; 12) containing a second gaseous or liquid medium (M2), wherein the first and second media are of different temperature, wherein the second store (12) has a passage opening (36) for direct connection of the second store (12) to a cylinder chamber (14) through a bottom (18) of the housing (34, 34'),
- the housing (34, 34') is a cylinder (10) which contains a cylinder piston (15) arranged in a liquid- and gas-tight manner and wherein the cylinder piston (15) forms the actuating element (35),
- the cylinder piston (15) divides the cylinder (10) into two separate cylinder chambers (14, 16), of which the one, first cylinder chamber (14) bounded by the base (18) contains the metal element (20) with shape memory properties and the other, second cylinder chamber (16) contains the restoring element (37),
- wherein the metal element (20) is anchored at an attachment point (A) to the cylinder piston (15) and at an attachment point (B) located within the second store (12) such that a portion (33) of the metal element (20) is in contact with the second gaseous or liquid medium (M2) of the second store (12) and a portion (39) is in contact with the second gaseous or liquid medium (M1) in the first cylinder chamber (14).

2. Drive system (100; 200; 300) according to claim 1, **characterized in that**
- the first store (11) is connected via a first pipe (19) to the second cylinder chamber (16) containing the restoring element (37), at least one first valve (21, 21') being installed in the pipe (19),
- the first store (11) is connected via a second pipe (22) to the first cylinder chamber (14) containing the metal element (20), at least one second valve (23) being installed in the pipe (22).

3. Drive system (100; 200; 300) according to claim 1 or 2, **characterized in that** the cylinder chamber (14) is connected to a third store (44) via a further pipe (40), the third store (44) being provided for receiving a third gaseous or liquid medium (M3),
so that if the third medium (M3) has a temperature (T3) which is lower than the first temperature (T1) of the first medium (M1) and higher than the second temperature (T2) of the second medium (M2), the part of the metal element (20) located in the cylinder chamber (14) is preheated when the cylinder piston (15) moves in the direction (R2) and the stroke frequency and thus the power of the drive system (100; 200; 300) is increased as a result.

4. Drive system (100; 200; 300) according to one of the claims 1 to 3, **characterised in that** a valve control (26) is provided which controls the first valve (21, 21') by a stroke of a piston rod (13) connected directly or indirectly to the cylinder piston (15).

5. Drive system (100; 200) according to any one of claims 1 to 4, **characterised in that** the restoring element (37) is a spring (17), preferably a tension spring.

6. Drive system (100; 200) according to one of the claims 1 to 5, **characterised in that** the cylinder piston (15) is a hollow body (52) which comprises at least one valve (21'; 60, 61).

7. Drive system (100; 200) according to any one of claims 1 to 6, **characterized in that** the first store (11) is arranged within the second cylinder chamber (16).

8. Drive system (300) according to one of the claims 1 to 7, **characterised in that** the restoring element (37) is formed by the piston rod (13) and a cable section (46, 46') coaxially connected to the piston rod (13), wherein the cable section (46, 46') is translationally movable up to a deflection pulley (47, 47').

9. Drive system (100; 200; 300) according to one of claims 1 to 8, **characterized in that** the media (M1, M2, M3) of the stores (11; 12; 44) are immiscible with one another and/or have different weights (W1, W2, W3).

10. Drive system (100; 200; 300) according to one of claims 1 to 9, **characterized in that** at least one store (11; 12; 44) is thermally insulated.

11. Drive system (300) according to one of claims 1 to 10, **characterised in that** several drive systems (100; 200) are coupled to one another and the movement of the cylinder pistons (15) is coordinated by a control device.

12. Drive system (300) according to claim 11, **characterised in that** an upper and/or lower end position control of the cylinder pistons (15) is provided as a control device, which preferably comprises a spring-assisted locking pin (61) for fixing.

## Revendications

1. Système d'entraînement (100 ; 200 ; 300) basé sur la conversion cyclique d'énergie thermique en énergie mécanique ou électrique en utilisant une différence de température entre au moins deux média (M1, M2) et la contraction d'un élément métallique (20) ayant une caractéristique de mémoire de forme, comprenant :
- au moins un groupe d'entraînement (48, 48' ; 49) qui comprend un boîtier (34 ; 34') avec au moins un élément métallique (20) placé à l'intérieur du boîtier (34, 34'),
- au moins un élément de rappel (37) situé à l'intérieur du boîtier (34 ; 34'),
- au moins un élément d'actionnement mobile (35), avec lequel l'élément métallique (20) et l'élément de rappel (37) sont couplés,
- l'élément métallique (20) et l'élément de rappel (37) étant entourés par un fluide gazeux ou liquide,
**caractérisé en ce que**
- le groupe d'entraînement (48, 48' ; 49) comprend au moins un premier réservoir (11) contenant un premier medium (M1) gazeux ou liquide et au moins un deuxième réservoir (12) contenant un deuxième medium gazeux ou liquide (M2), les premier et deuxième media ayant de température différente, le deuxième réservoir (12) présentant une ouverture de passage (36) pour la liaison directe du deuxième réservoir (12) avec une chambre de cylindre (14) par un fond (18) du boîtier (34, 34'),
- le boîtier (34, 34') est un cylindre (10) qui contient un piston de cylindre (15) disposé de manière étanche aux liquides et aux gaz, et le piston de cylindre (15) forme l'élément d'actionnement (35),
- le piston de cylindre (15) divise le cylindre (10) en deux espaces de cylindre (14, 16) séparés l'un de l'autre, dont le premier espace de cylindre (14) délimité par le fond (18) contient l'élément métallique (20) avec une caractéristique de mémoire de forme et l'autre, le deuxième espace de cylindre (16) contient l'élément de rappel (37),
- l'élément métallique (20) étant ancré en un point de fixation (A) sur le piston de cylindre (15) et en un point de fixation (B) disposé à l'intérieur du deuxième réservoir (12), de sorte qu'une zone partielle (33) de l'élément métallique (20) est en contact avec le deuxième medium gazeux ou liquide (M2) du deuxième réservoir (12) et une zone partielle (39) avec le premier medium gazeux ou liquide (M1) dans la première chambre de cylindre (14).

2. Système d'entraînement (100 ; 200 ; 300) selon la revendication 1, **caractérisé en ce que**
- le premier réservoir (11) est relié par une première conduite tubulaire (19) à la deuxième chambre de cylindre (16) contenant l'élément de rappel (37), au moins une première soupape (21, 21') étant montée dans la conduite tubulaire (19),
- le premier réservoir (11) est relié par une deuxième conduite (22) à la première chambre cylindrique (14) contenant l'élément métallique (20), au moins une deuxième soupape (23) étant montée dans la conduite (22).

3. Système d'entraînement (100 ; 200 ; 300) selon la revendication 1 ou 2, **caractérisé en ce que** l'espace cylindrique (14) est relié par une autre conduite (40) à un troisième réservoir (44), le troisième réservoir (44) étant prévu pour recevoir un troisième medium gazeux ou liquide (M3),
de sorte que, lorsque le troisième medium (M3) présente une température (T3) qui est inférieure à la première température (T1) du premier medium (M1) et supérieure à la deuxième température (T2) du deuxième medium (M2), la partie de l'élément métallique (20) se trouvant dans la chambre de cylindre (14) est préchauffée lors du déplacement du piston de cylindre (15) dans la direction (R2) et la fréquence de course et donc la puissance du système d'entraînement (100 ; 200 ; 300) augmentent de ce fait.

4. Système d'entraînement (100 ; 200 ; 300) selon l'une des revendications 1 à 3, **caractérisé en ce qu'**il est prévu une commande de soupape (26) qui commande la première soupape (21, 21') par une course d'une tige de piston (13) reliée directement ou indirectement au piston de cylindre (15).

5. Système d'entraînement (100 ; 200) selon l'une des revendications 1 à 4, **caractérisé en ce que** l'élément de rappel (37) est un ressort (17), de préférence un ressort de traction.

6. Système d'entraînement (100 ; 200) selon l'une des revendications 1 à 5, **caractérisé en ce que** le piston de cylindre (15) est un corps creux (52) qui comprend au moins une soupape (21' ; 60, 61).

7. Système d'entraînement (100 ; 200) selon l'une des revendications 1 à 6, **caractérisé en ce que** le premier réservoir (11) est disposé à l'intérieur de la deuxième chambre de cylindre (16).

8. Système d'entraînement (300) selon l'une des revendications 1 à 7, **caractérisé en ce que** l'élément de rappel (37) est formé par la tige de piston (13) et un tronçon de câble (46, 46') raccordé coaxialement à la tige de piston (13), le tronçon de câble (46, 46') étant mobile en translation jusqu'à une poulie de renvoi (47, 47').

9. Système d'entraînement 100 ; 200 ; 300) selon l'une des revendications 1 à 8, **caractérisé en ce que** les fluides (M1, M2, M3) des réservoirs (11 ; 12 ; 44) ne sont pas miscibles entre eux et/ou présentent des masses volumiques différentes (W1, W2, W3).

10. Système d'entraînement (100 ; 200 ; 300) selon l'une des revendications 1 à 9, **caractérisé en ce qu'**au moins un réservoir (11 ; 12 ; 44) est isolé thermiquement.

11. Système d'entraînement (300) selon l'une des revendications 1 à 10, **caractérisé en ce que** plusieurs systèmes d'entraînement (100 ; 200) sont couplés les uns aux autres et **en ce que** le mouvement des pistons de cylindre (15) est coordonné par un dispositif de commande.

12. Système d'entraînement (300) selon la revendication 11, **caractérisé en ce qu'**il est prévu comme dispositif de commande une commande de fin de course supérieure et/ou inférieure des pistons de vérin (15), qui comprend de préférence un boulon d'arrêt (61) assisté par ressort pour la fixation.
